# EUROPEAN PATENT APPLICATION

(11) **EP 4 679 576 A1**
(43) Date of publication of application: **14.01.2026**
(21) Application number: 25188706.3
(22) Date of filing: 10.07.2025
(51) Int. Cl.: H01M 50/103, H01M 50/148, H01M 50/204, H01M 50/242, H01M 50/249, H01M 50/30, H01M 10/625

(54) **PRISMATIC BATTERY CELL, BATTERY MODULE PROVIDED WITH SUCH BATTERY CELL, AND CORRESPONDING BATTERY PACK**

(30) Priority: 11.07.2024 IT 202400016132
(71) Applicant: FERRARI S.p.A., 41100 Modena (IT)
(72) Inventor: VENTURI, Enrico, 41100 MODENA (IT); DAGLI, Hilmi Daghan, 41100 MODENA (IT); DI COLA, Angelica, 41100 MODENA (IT)
(74) Representative: Studio Torta S.p.A.

(57) **Abstract**

A prismatic battery cell (20) has a shell (21) with an upper wall (22), from which at least one electrical connector (26) protrudes, a lower wall (23) and a perimetral wall (24); the battery cell (20) further has a safety valve (30) carried by the shell (21) and configured to vent, outwardly, gases possibly generated within the shell (21); the safety valve (30) is arranged in proximity to the lower wall (23) of the shell (21) so as to vent the gases into a cavity (14) defined by a lower area of a battery pack (1) where the battery cell (20) is installed.

## Description

### Cross-reference to related applications

This patent application claims priority from Italian patent application no. 102024000016132 filed on July 11, 2024, the entire disclosure of which is incorporated herein by reference.

### Technical field

The invention relates to a prismatic battery cell, which is normally used to form a battery module containing a plurality of prismatic cells, which are aligned in a row, for the transport industry, for example for electric motor vehicles and hybrid motor vehicles with thermal and electric drive.

### Background

As it is known, in electric or hybrid vehicles with battery packs, the latter each consist of a plurality of electric energy storage modules, commonly referred to as "battery modules", arranged in positions close to one another within a support structure. In turn, each battery module includes a casing and a plurality of battery cells, arranged in said casing in side-by-side positions so as to form a row.

For prismatic battery cells, each battery cell has a shell with a parallelepiped shape, generally made of aluminium, having an upper side from which two electrical connectors protrude, so as to define two electrical poles respectively, namely anode and cathode. The two electrical connectors are electrically insulated from one another, and also with respect to the battery cell shell, and are electrically connected in series to the adjacent battery cells, in the same battery module, by connection elements commonly referred to as "busbars". The latter are connected so as to provide the expected electrical voltage on the outside of the casing of the battery module.

Each battery cell is also provided with a safety valve (or, in any case, with a preferential breaking zone to define an opening in case of need for venting), configured so as to limit the pressure in the event of a possible emission of gas into its shell, for example in case of thermal instability. The safety valve is arranged on the upper side of the shell, in an intermediate position between the two electrical connectors. The gases vented through the safety valve fill an upper volume of the battery module and, from here, can flow out into an empty upper zone of the battery pack.

As it is known, the battery pack is mounted on the vehicles at the floorboard, with precautions such as to guarantee safety in the event of collisions and possible intrusion of objects from below. To this purpose, an empty volume is generally provided below the battery modules to vertically space the latter apart from a wall that defines the bottom of the vehicle, towards the road surface.

In particular, said empty volume spaces the bottom wall of the vehicle apart from a cooling system, which is normally provided for cooling the battery modules from below. This cooling system, indeed, is usually defined by a horizontal plate, which has a plurality of channels, where a heat exchange liquid flows, and is arranged at the base of each battery module.

When dealing with these known solutions, there is a need to reduce dimensions in the vertical direction, while continuing to meet the safety requirements indicated above in relation to collisions and possible intrusions of objects from below.

In fact, the vertical dimensions of the known solutions described above are relatively large, since they consist of several addends, i.e.
- the empty space provided above the bottom wall of the vehicle, for safety against collisions and intrusions from below,
- the height needed for the horizontal cooling plate,
- the typical height of the battery modules, and
- the empty upper area of the battery pack, where any gases emitted by the battery cells can be vented.

In addition to reducing dimensions in the vertical direction, there is a further need to improve the efficiency of the cooling systems of known solutions. To this regard, known solutions with a horizontal cooling plate, although very simple, do not manage to remove heat in an optimal manner from the components arranged higher up in the battery modules and may require the use of suitable thermal conductors, which transfer heat to the cooling plate.

Therefore, the object of the invention is to fulfil the needs discussed above in a relatively simple and economic fashion.

### Summary

According to the invention, there is provided a prismatic battery cell as defined in claim 1.

The invention also relates to a battery module as defined in claim 6 and to a battery pack as defined in claim 14.

The other claims relate to specific and preferred embodiments according to the invention.

### Brief description of the drawings

The invention will be best understood upon perusal of the following detailed description of a preferred embodiment, which is provided by way of example and is not limiting, with reference to the accompanying drawings, in which:
- figure 1 is a schematic and simplified view showing, in cross section, a preferred embodiment of the battery cell and of the corresponding battery module according to the invention;
- figure 2 shows in perspective, with exploded parts and in a simplified manner, the battery module visible in figure 1; and
- figure 3 is a view similar to that shown in figure 1 and relates to a variant of the battery cell according to the invention.

### Description of embodiments

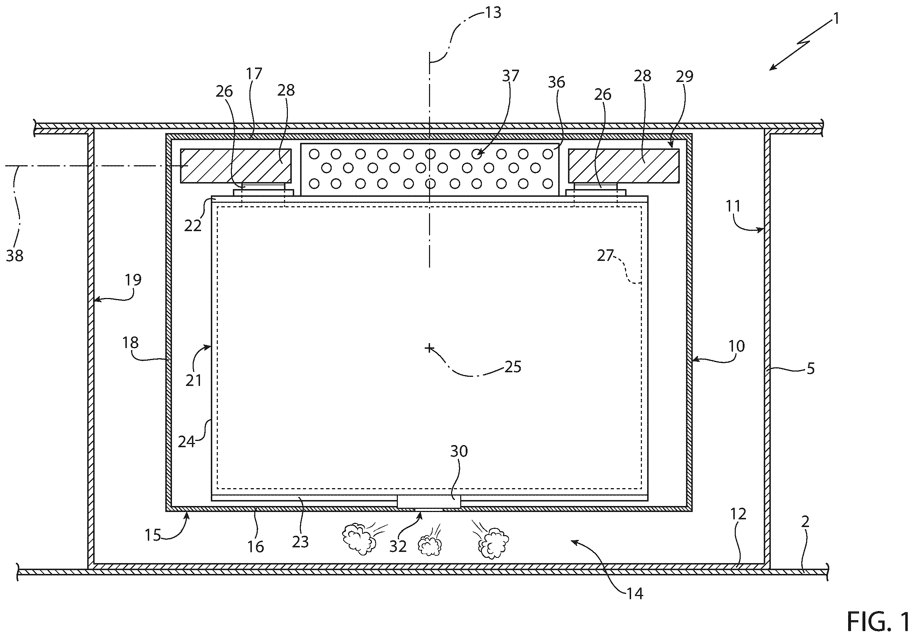

In figure 1, reference number 1 indicates, as a whole, a battery pack (partially and schematically shown) mounted on a vehicle, of which only a bottom wall 2 is shown, which has a lower surface facing, in use, the road surface.

The battery pack 1 comprises a support structure 5 and, preferably, a plurality of rechargeable electrical energy storage modules, hereinafter referred to as battery modules 10, only one of them being schematically shown herein.

The structure 5 defines a housing 11, which accommodates the battery modules 10; the latter are supported by the structure 5 in a way that is not shown herein, so as to be placed in fixed positions in the housing 11.

The structure 5 can be separate from the bottom wall 2 or it can be integrated with the bottom wall 2. In other words, the structure 5 ends, at a lower end of its, with a base plate 12, which delimits the housing 11 from below, can rest on the bottom wall 2, can be vertically spaced apart from the latter or can directly constitute part of the bottom wall 2.

The battery modules 10 have respective electrical terminals (not shown), which are connected in such a way as to transfer electrical energy to and from an electrical system (not shown) of the vehicle. In particular, the vehicle has a control unit, not shown, configured so as to manage the transfer of electrical current, monitor the state of charge, monitor the efficiency of the battery modules 10, etc..

For example, in the housing 11 of the battery pack 1, the battery modules 10 are arranged in positions aligned with and adjacent to one another, along one or more horizontal rows.

Considering a direction 13, which, in use, substantially coincides with the vertical direction, the battery modules 10 are spaced apart from the base plate 12 in such a way as to define a cavity 14, namely an empty space. In particular, the cavity 14 corresponds to a lower zone of the housing 11 of the battery pack 1. The cavity 14 defines a safety distance along the direction 13 against possible impacts hitting the bottom wall 2 from below and against possible intrusion of objects from below through the bottom wall 2 and the base plate 12, in order to preserve the integrity of the battery modules 10.

Preferably, all the battery modules 10 of the battery pack 1 are the same, in terms of shape, size and structure.

The battery module 10 comprises a casing 15, which has an essentially parallelepiped shape and, in turn, comprises a lower wall 16, which is preferably spaced apart from the base plate 12 of the battery pack 1 as mentioned above. The casing 15 further comprises an upper wall 17, in an opposite position relative to the lower wall 16 along the direction 13, and a perimetral wall 18 consisting of four faces or sides, consecutive to one another along a peripheral edge of the lower wall 16, so as to delimit, on the inside, a housing 19. For example, the lower wall 16 and the perimetral wall 18 are integral to one another, while the upper wall 17 is a distinct element, coupled to an upper edge of the perimetral wall 18 so as to close the housing 19 at the top.

The housing 19 accommodates a plurality of battery cells 20, which are prismatic, namely they each have a respective shell 21 with a parallelepiped shape. The shell 21 is generally made of aluminium.

In particular, the shell 21 comprises an upper wall 22 and a lower wall 23, which are arranged in opposite positions relative to one another along the direction 13, are transverse to the direction 13 and have a perimeter joined by a perimetral wall 24 consisting of four faces or sides, consecutive to one another.

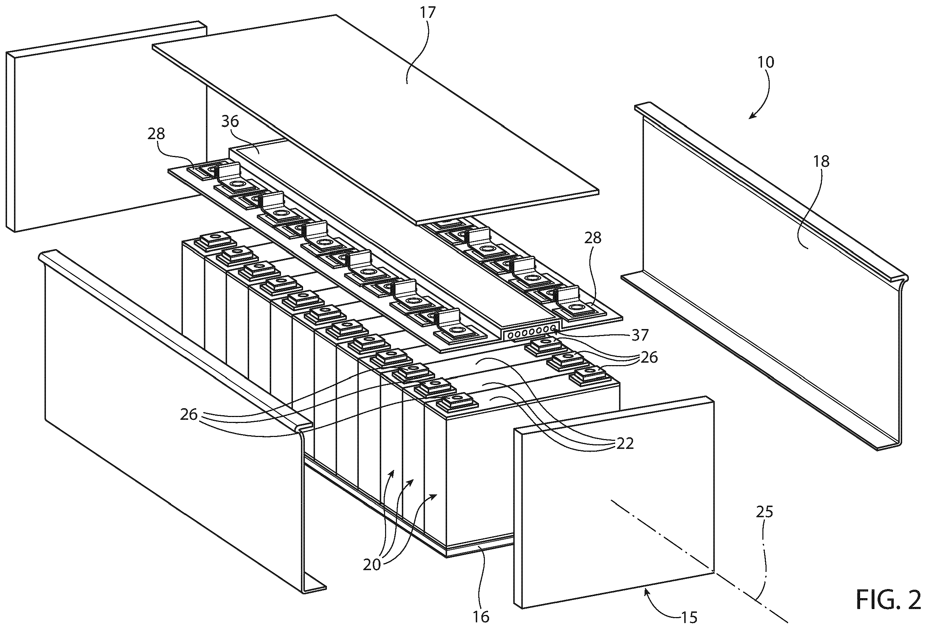

According to figure 2, the battery cells 20 are arranged in a lower portion of the housing 19, in a row along a direction 25, which is orthogonal to the direction 13 (and oriented longitudinally along the largest dimension of the casing 15).

Each one of the battery cells 20 comprises two electrical connectors 26, which define an anode and a cathode respectively, can be defined by respective tabs and project upwards with respect to the upper wall 22 of the shell 21. In particular, the electrical connectors 26 go through respective holes in the upper wall 22 and are electrically insulated relative to the shell 21.

With reference to figure 1, inside the shell 21, the electrical connectors 26 are then connected, according to known techniques that are not discussed herein, to at least one inner component 27, consisting of layers of cathodic and anodic material (not not shown), alternated with and insulated from one another, in the form of a stack or in the form of a winding, commonly called "jelly roll".

The electrical connectors 26 are externally connected (for example, through welding) to busbars 28, which are arranged in an upper portion 29 of the housing 19, are configured so as to electrically connect in series all the battery cells 20 and, in turn, are connected to the outer electrical terminals of the battery module 10 to transfer electric current. The busbars 28 are electrical connection elements represented in a schematic and simplified manner in the accompanying figures (just like all the other components) and, therefore, they can have a different configuration than the one shown herein.

The battery cell 20 further comprises a safety valve 30, carried by the shell 21 and configured so as to vent outwards any gases that may be produced by the inner component 27 under certain operating conditions. Normally, such gases have a relatively high temperature.

For the purposes of this disclosure, the term "safety valve" is to be understood relatively broadly to include any device capable of defining a vent opening, for example any weakened areas or preferential breaking lines that are intended to open a passage through the shell 21 in case of need for venting, for example in the event of inner overpressure.

According to the invention, the safety valve 30 is arranged along the lower wall 23, namely opposite the upper wall 22 and the electrical connectors 26, considering the direction 13, so as to release said gases downwards. At the same time, the lower wall 16 of the casing 15 is provided with one or more openings 32, preferably defined by one-way valves or check valves, which establish a communication between the housing 19 of the battery module 10 and the cavity 14, which vertically separates the battery modules 10 from the bottom wall 2 (but forbid the flow in the opposite direction). In this way, the gases produced by the battery cells 20 easily leave the battery module 10 and find an outlet in the cavity 14, which therefore has an additional function, in addition to the one described above relating to the spacing against collisions and possible intrusions of objects from below. In particular, the gases vented by the safety valves 30 towards the lower zone of the battery pack 1 can then be released outside the cavity 14 and the support structure 5, by means of known techniques not described in detail.

Preferably, the openings 32 are vertically aligned with the safety valves 30.

Thanks to this downward gas venting direction and to the double function of the cavity 14, it is not necessary to provide a vent for said gases in the upper part of the housing 11, so that the battery pack 1 has more compact dimensions along the direction 13 compared to known solutions, in which the safety valves 30 are arranged at the upper wall 22 between the electrical connectors 26.

The battery module 10, moreover, has a cooling system comprising a heat exchanger element 36 provided with one or more inner channels 37, into which, in use, a heat transfer fluid flows, in order to remove heat, for example through thermal conduction, from the warmer parts of the battery module 10 towards said fluid and, therefore, maintain the temperature below an appropriate safety threshold. The heat exchanger element 36 is preferably arranged in the upper portion 29 of the housing 19. In particular, it directly faces the upper walls 22 of the shells 21 and/or is arranged beside at least one of the electrical connectors 26 and/or in an intermediate position between the busbars 28 considering a direction 38 that is orthogonal to the directions 13 and 25. In this way, the heat produced at the contact areas between the electrical connectors 26 and the busbars 28 is easily and effectively removed by the heat exchanger element 36, taking advantage of the space above the upper wall 22, which in known solutions is instead used for gas venting.

The inner channels 37 communicate with the outside of the battery module 10 in a way that is not shown herein, so as to convey the heat exchange liquid into a cooling system that is not shown herein. For example, the heat exchanger element 36 is supported in a fixed position by the upper wall 17 or it can be integrated in the latter.

The heat exchanger element 36 can be spaced apart from the shell 21 or can be in direct contact with the upper wall 22. For example, an electrically insulating but thermally conductive material can be inserted between the shell 21 and the heat exchanger 36 (for example, the so-called "thermal pads" that are commonly used in the electronic field).

For example, as schematically shown in figure 2, the heat exchanger element 36 is a continuous element that extends longitudinally along all the battery cells 20 arranged in the housing 18 of the battery module 10. The actual outer configuration of the heat exchanger element 36 may in any case be designed so as to adapt to the actual spaces available in the upper portion 29 of the housing 19 and/or to be able to cool the electrical components (electrical connectors 26, busbars 28, etc.) and/or any electronic components provided in the battery module 10. According to variants which are not shown herein, the electrical and/or electronic components can also be cooled by interposing a thermally conductive material with respect to the heat exchanger 36.

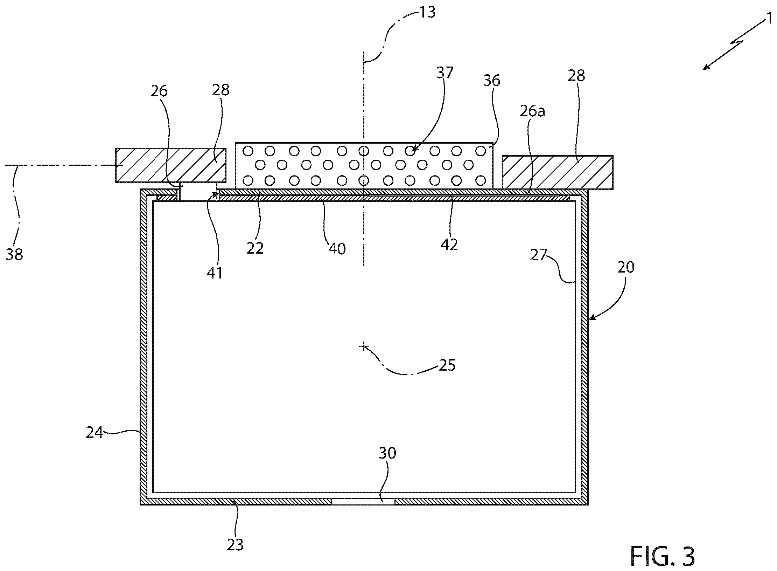

In the variant schematically shown in figure 3, the battery cell 20 has one single electrical connector 26 that defines a first electrical pole (anode or cathode) and, at the same time, the upper wall 22 of the shell 21 directly defines the other electrical pole, indicated by reference 26a, according to a configuration usually called "tab-less", "anode-less" or "cathode-less".

For example, in order to obtain this configuration, the shell 21 houses a collector plate 40, made of an electrically conductive material, in particular a metal material (for example, aluminium if the electrical pole 26a defined by the upper wall 22 is the cathode or steel if the electrical pole 26a is the anode) to connect the corresponding (cathodic or anodic) layers of the inner component 27 to the shell 21. In particular, the collector plate 40 is arranged above the inner component 27, namely between the latter and the upper wall 22. According to a variant which is not shown herein, the collector plate 40 is directly defined by a portion of the shell 21, for example by the upper wall 22.

The electrical connector 26 goes through a hole 41 of the collector plate 40, is electrically insulated from the latter and is electrically connected to the other (anodic or cathodic) layers of the inner component 27. Preferably, at the opposite end relative to the electrical connector 26 along the direction 38, the collector plate 40 has a connection zone 42 welded to the upper wall 22, with a relatively wide extension along the direction 38 in order to reduce the electrical resistance at the connection area. In particular, the weld at the connection zone 42 also extends under the heat exchanger element 36.

Therefore, compared to the solution of figure 2 with two electrical connectors 26 protruding from the shell 21, the following advantages can be obtained:
- increasing the width of the area of electrical contact with the inner component 27, in order to reduce the electrical resistance (hence, increasing the electrical power transmitted with the same heating);
- also expanding the area of connection between the battery cell 20 and the busbar 28 at the electrical pole 26a directly defined by the upper wall 22 (again, in order to reduce the electrical resistance and, therefore, increase the electrical power transmitted);
- effectively cooling the connection zone 42, as part of the latter is arranged immediately under the heat exchanger element 36, as mentioned above, and therefore is extremely close to it;
- expanding the extension of the heat exchanger element 36 on the upper wall 22 along the direction 38, if the dimensions of the busbars 28 allow for this;
- reducing the number of components, in case the collector plate 40 is directly defined by a portion of the shell 21.

The electrical connection between the inner component 27 and the shell 21, in order to integrate the electrical pole 26a in the upper wall 22 (and avoid one of the two electrical connectors 26), can in any case be obtained by means other than the collector plate 40 described by way of example.

Owing to the above, it is evident that placing the safety valve 30 at a lower area of the shell 21, in particular on the lower wall 23, entails numerous advantages: first of all, a reduction in the dimensions of the battery pack 1 is obtained in a vertical direction, namely along the direction 13. Indeed, compared to known solutions configured so as to vent the gases of the battery cells into an empty upper zone of the battery pack, said empty upper zone can be completely omitted, as the gases are vented downwards into the cavity 14, namely into the same volume that is already provided as a spacer to guarantee the integrity of the battery cells 20 with respect to any collisions and intrusions from below. In other words, as explained above, the cavity 14 now performs a double function (as a vertical spacer between the bottom wall 2 and the battery cells 20 and as a vent volume for gases) .

In addition, the position of the safety valve 30 allows a cooling system to be introduced at the upper portion 29 of the housing 19, in particular in a position that is intermediate between the busbars 28 and/or in a position that faces the upper wall 22 of the shells 21, so as to remove heat from components that are usually subjected to substantial temperature increases during use, due to the electrical contacts between the battery cell 20 and the busbars 28.

Finally, the fact of integrating one of the electrical poles in the shell 21 of the battery cell 20, for example by means of the solution of figure 3, allows for a further improvement in the cooling, in addition to obtaining a reduction in the electrical resistance and therefore an increase in the electrical power transmitted.

Further advantages are evident for a person skilled in the art based on the information disclosed above with reference to the accompanying drawings.

Finally, it is clear that the battery 20 and the corresponding battery module 10 disclosed and shown herein can be subjected to changes and variations, without for this reason going beyond the scope of protection of the invention defined in the appended claims.

In particular, the safety valve 30 could not be arranged centrally on the lower wall 23, although this position is shown in figures 2 and 3; namely, it could be arranged in an offset position, possibly also along an edge of the lower wall 23. If needed, the safety valve 30 could be arranged at a lower area of the perimetral wall 24, thus, in any case, close to the lower wall 23, in order to obtain the same effect of venting the gases downwards, namely towards the cavity 14.

Furthermore, the battery cells 20 could be directly mounted in the support structure 5 of the battery pack 1, without being divided into several battery modules separated from one another, according to a solution that is usually indicated as "cell-to-pack". Of course, what is described above with regard to the heat exchanger element 36 also applies to this type of solution: in other words, in this case, one or more heat exchanger elements 36 can advantageously be arranged in an upper portion of the housing 11.

## Claims

1. Prismatic battery cell (20) comprising:
- a shell (21) comprising:
a) a first upper wall (22) and a first lower wall (23), opposite to each other along a first direction (13) which, in use, extends vertically;
b) a first perimetral wall (24) between said first and second walls (22,23);
- a first and second electrical pole; said first electrical pole being defined by an electrical connector (26) protruding from said first upper wall (22) and electrically insulated from said first upper wall (22); and
- a safety valve (30) carried by said shell (21) and configured to vent, outwardly, possible gases generated within said shell (21);
**characterized in that** said safety valve (30) is arranged in proximity of said first lower wall (23).

2. The battery cell according to claim 1, wherein said safety valve (30) is arranged along said first lower wall (23).

3. The battery cell according to claim 2, wherein said safety valve (30) is arranged in an intermediate area of said first lower wall (23).

4. The battery cell according to any one of the preceding claims, wherein said second electrical pole (26a) is defined directly by said first upper wall (22).

5. The battery cell according to claim 4, wherein said battery cell (5) comprises a collector plate (40) which is made of an electrically conductive material, is arranged within said shell (21), or defines part of said shell (21), has a hole (41) engaged by said electrical connector (26) and is electrically insulated with respect to said electrical connector (26) .

6. Battery module (1) comprising:
- a plurality of battery cells (20), each according to any one of the preceding claims, and arranged in a row along a second direction (25) orthogonal to said first direction (13);
- a casing (15) comprising:
a) a second upper wall (17) and a second lower wall (16), opposite to each other along said first direction (13) and arranged at the first upper walls (22) and the first lower walls (23) of said battery cells (20), respectively;
b) a second perimetral wall (19) between said second upper wall (17) and said second lower wall (16);
c) a housing (19) bounded by said second upper wall (17), second lower wall (16) and second perimetral wall (19), and comprising a lower portion, housing said battery cells (20), and an upper portion (29) at said second upper wall (17);
- busbars (28) arranged in said upper portion (29) and configured so as to electrically connect in series the first and second electrical poles of said battery cells (20);
wherein said casing (15) has at least one opening (32) connecting said lower portion with the outside.

7. The battery module according to claim 6, wherein said opening (32) is defined by a check valve.

8. The battery module according to claim 6 or 7, wherein said upper portion (29) houses a heat exchanger element (36) having at least one inner channel (37), in which a heat transfer fluid flows, in use, for removing heat.

9. The battery module according to claim 8, wherein said heat exchanger element (36) extends parallel to said second direction (25) above a plurality of said battery cells (20).

10. The battery module according to claim 8 or 9, wherein said heat exchanger element (36) is arranged in an intermediate position between said busbars (28), considering a third direction (38) orthogonal to said first and second directions (13,25).

11. The battery module according to any one of claims 8 to 10, wherein said heat exchanger element (36) is arranged alongside at least one of said electrical connectors (26) considering a third direction (38) orthogonal to said first and second directions (13,25).

12. The battery module according to any one of claims 8 to 11, wherein said heat exchanger element (36) directly faces at least one of the first upper walls (22) of the battery cells (20).

13. The battery module according to claim 12, wherein said heat exchanger element (36) is coupled so as to rest onto said at least one of the first upper walls (22).

14. Battery pack (1) comprising:
- a plurality of battery cells (20) according to any one of claims 1 to 5,
- a support structure (5) supporting and housing said battery cells (20) and ending, downwardly, with a base plate (12); and
- a cavity (14) arranged between said base plate (12) and said battery cells (20) along said first direction (13) and configured to receive gases coming out of the safety valves (30).
